# EUROPÄISCHE PATENTANMELDUNG

(11) **EP 0 655 564 A1**
(43) Veröffentlichungstag der Anmeldung: **31.05.1995**
(21) Anmeldenummer: 94116904.7
(22) Anmeldetag: 26.10.1994
(51) Int. Cl.: F16D 69/00, F16D 65/02

(54) **Schiebesattel für eine Scheibenbremse und Verfahren zum Herstellen von dessen Belagdruckfläche**

(30) Priorität: 04.11.1993 DE 4337667
(71) Anmelder: KNORR-BREMSE SYSTEME FÜR NUTZFAHRZEUGE GmbH, 80809 München (DE)
(72) Erfinder: Baumgartner, Hans, D-85368 Moosburg (DE); Bieker, Dieter, D-83064 Raubling (DE); Trimpe, Robert, D-80992 München (DE)
(74) Vertreter: KUHNEN, WACKER & PARTNER

(57) **Zusammenfassung**

Es wird ein Schiebesattel (20) für eine Scheibenbremse offenbart, der eine Belagdruckfläche (21) aufweist, die der Zuspannvorrichtung (3) der Scheibenbremse bezüglich der Bremsscheibe (1) gegenüberliegt und beim Bremsen auf die Rückseite der auf dieser Seite befindlichen Bremsbacke (11) derart einwirkt, daß diese gegen die Bremsscheibe gedrückt wird. Um die Herstellungskosten für die Belagdruckfläche (21) senken zu können, wird vorgeschlagen, die Belagdruckfläche mit einem Oberflächenprofil zu versehen, dessen wirksame Anlagefläche an der Rückseite der Bremsbacke so bemessen ist, daß bei maximalem Bremsdruck eine Flächenpressung auftritt, die zu einer im wesentlichen vollständigen Anlage der Belagdruckfläche an der Rückseite der Bremsbacke (11) führt. Ein geeignetes Verfahren zum Herstellen eines derartigen Profils ist ein Prägevorgang, jedoch kann das Profil auch beim Gießen des Schiebesattels (20) ausgebildet werden.

## Beschreibung

Die vorliegende Erfindung bezieht sich auf ein Verfahren gemäß dem Oberbegriff des Anspruchs 1 zum Herstellen einer Belagdruckfläche eines Schiebesattels sowie auf einen Schiebesattel gemäß dem Oberbegriff des Anspruchs 4.

Ein Schiebesattel, manchmal auch als "Schwimmsattel" bezeichnet, ist bekanntlich für solche Scheibenbremsen vorgesehen, die lediglich auf einer Seite der Bremsscheibe eine Zuspannvorrichtung aufweisen. Diese einzige Zuspannvorrichtung wird beim Bremsen betätigt und schiebt dabei den auf ihrer Seite in einem Bremsbelagschacht gelagerten Bremsbelag über mindestens ein von einer Nachstelleinrichtung verstellbares Druckstück zur Bremsscheibe hin, bis dieser mit seiner Reibfläche (Bremsbacke) schließlich an der betreffenden Seitenfläche der Bremsscheibe anliegt. Aufgrund der in Axialrichtung wirkenden Reaktionskräfte mit der Bremsscheibe wird der in Axialrichtung verschiebbar gelagerte Schiebesattel daraufhin in Gegenrichtung verschoben drückt dadurch einen auf der gegenüberliegenden Seite der Bremsscheibe befindlichen, gleichfalls in einem Belagschacht angeordneten Bremsbelag ebenfalls gegen die Bremsscheibe. Beim weiteren Zuspannen der Zuspannvorrichtung wird sodann die Bremskraft in die Bremsscheibe eingeleitet, worauf der eigentliche der Bremsvorgang beginnt.

Um den gegenüberliegenden, von der Zuspannvorrichtung nicht direkt beaufschlagten Bremsbelag möglichst genau und gleichmäßig gegen die Bremsscheibe drücken zu können, ist auf dieser Seite des Schiebesattels eine Belagdruckfläche ausgebildet, die parallel zu der meist aus einer metallischen Belagträgerplatte bestehenden Rückwand des Bremsbelags verläuft und mit vergleichsweise hoher Genauigkeit gefertigt werden muß. Der für diese hohe Genauigkeit der Belagdruckfläche erforderliche mechanische Bearbeitungsaufwand ist relativ groß, da er eine spanabhebende Bearbeitung beinhaltet, die gegebenenfalls sogar mit einem zusätzlichen Planschleiff-Vorgang verbunden ist. Da die Belagdruckfläche bei der Bearbeitung zudem nur schwer zugänglich ist, stellt die Herstellung der Belagdruckfläche einen nicht zu vernachlässigenden Kostenfaktor dar.

Der Erfindung liegt die Aufgabe zugrunde, ein Verfahren zum Herstellen einer Belagdruckfläche gemäß dem Oberbegriff des Anspruchs 1 anzugeben, das sich mit geringeren Kosten durchführen läßt.

Diese Aufgabe wird erfindungsgemäß mit den im Kennzeichnungsteil des Anspruchs 1 angegebenen Verfahrensschritten gelöst.

Erfindungsgemäß ist demzufolge vorgesehen, an der Belagdruckfläche ein Oberflächenprofil auszubilden, dessen wirksame Anlagefläche an der Rückseite des Bremsbelags so bemessen wird, daß bei maximalem Bremsdruck eine Flächenpressung hervorgerufen wird, die zu einer im wesentlichen vollständigen Anlage der Belagdruckfläche an der Rückseite des Bremsbelags führt. D.h., der grundsätzliche Erfindungsgedanke ist darin zu sehen, die erforderliche Anpreßfläche zwischen der Belagdruckfläche und der Rückseite des Bremsbelags durch den eigentlichen Bremsvorgang zu erzeugen: mit der gewählten Dimensionierung des Profils wird nämlich erreicht, daß die unter Maximaldruck beim Bremsen auftretende Flächenpressung auf der Rückseite des Bremsbelags und ggf. auch auf Seiten der Belagdruckfläche (was, wie nachstehend noch erläutert wird, im Hinblick auf erforderliche Belagwechsel jedoch vermieden werden sollte) eine Verformung der Oberfläche(n) herbeiführt, wodurch diese beiden Flächen nach Ablauf einer gewissen "Einbremszeit" schließlich vollständig bzw. formschlüssig aneinanderliegen.

Die erfindungsgemäße, quasi "selbsttätige" Ausbildung des Anlagebereichs zwischen Belagdruckfläche und Bremsbelag führt zu deutlich verringerten Herstellungskosten, da sich das jeweils erforderliche Profil beispielsweise nach der Lehre des Anspruchs 2 mittels eines Prägevorgangs ausbilden läßt, der problemlos und vergleichsweise preisgünstig durchgeführt werden kann. Untersuchungen haben im übrigen gezeigt, daß die in der Praxis erforderlichen Profile durch Prägung ausgebildet werden können, ohne dabei ein unerwünschtes Verziehen dieses Bereichs des Schiebesattels befürchten zu müssen.

Alternativ hierzu kann das erfindungsgemäße Profil nach der Lehre des Anspruchs 3 auch bereits beim Gießen des Schiebesattels ausgebildet werden, indem die Gußform an der Belagdruckfläche so gestaltet wird, daß an dieser Stelle ein geeignetes Profil entsteht; in der Praxis hat es sich gezeigt, daß tatsächlich bereits die normalen Unebenheiten der Gußform bzw. des damit hergestellten Gußteils ein ausreichend ausgeprägtes und geeignet bemessenes "Profil" im Sinne der Erfindung darstellen, so daß die Herstellung der Belagdruckfläche praktisch mit keinen Zusatzkosten verbunden ist.

Gegenstand der Erfindung ist nach der Lehre der Ansprüche 4 bis 6 schließlich auch ein Schiebesattel, dessen Belagdruckfläche mit einem erfindungsgemäß dimensionierten Profil versehen ist. Wie bereits erwähnt, ist es hierbei von Vorteil, für einen derartigen Schiebesattel Bremsbeläge zu verwenden, deren der Belagdruckfläche zugewandte Seite aus einem Material besteht, das weicher ist als das Material der Belagdruckfläche bzw. des Schiebesattels. Mit dieser Maßnahme wird nämlich erreicht, daß die Flächenpressung beim Bremsen ausschließlich dazu führt, daß sich das Profil der Belagdruckfläche in die Rückseite des Bremsbelags einprägt, ohne dabei vom Bremsbelag verformt zu werden, wobei eine nur geringfügige Verformung selbstverständlich tolerierbar ist; hierdurch ist sichergestellt, daß das Profil auch nach mehreren Belagwechseln noch ausreichend stark konturiert ist, um ein sicheres und formschlüssiges Anpressen des Bremsbelags zu gewährleisten.

Die Erfindung wird nachstehend anhand der Beschreibung von Ausführungsbeispielen unter Bezugnahme auf die Zeichnung näher erläutert. Es zeigen:
**Fig.1** anhand eines Querschnitts den schematischen Aufbau des Schiebesattels und der zugehörigen Zuspannvorrichtung einer Scheibenbremse; und
**Fig.2A** bis **2D** vier beispielhafte Ausführungsformen des an der Belagdruckfläche ausgebildeten Profils.

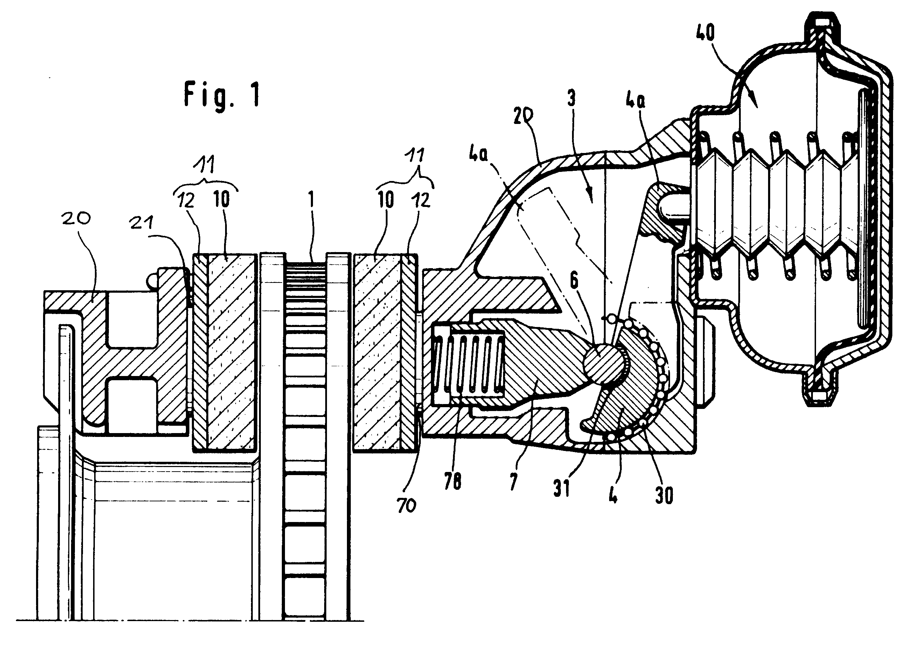

Um die der Erfindung zugrundeliegende Problematik zu verdeutlichen, sollen zunächst der prinzipielle Aufbau und die Wirkungsweise des Schiebesattels einer Scheibenbremse näher erläutert werden. Wie aus Fig.1 zu erkennen ist, wird eine (innenbelüftete) Bremsscheibe 1, die an einer nicht näher bezeichneten Achse eines Nutzfahrzeugs befestigt ist, von einem Bremssattel in Form eines Schiebesattels 20 umfaßt. Der Schiebesattel 20 ist mittels eines (nicht gezeigten) starren Führungslagers sowie mittels eines (ebenfalls nicht gezeigten) Ausgleichslagers in axialer Verschiebbarkeit bezüglich der Bremsscheibe 1 am Fahrzeug gelagert. Im übrigen sind Aufbau und Funktion eines derartigen Schiebesattels bekannt, so daß sich eine nähere Erläuterung erübrigen dürfte.

Auf der in Fig.1 rechten Seite der Bremsscheibe 1 ist eine schematisch mit dem Bezugszeichen 3 bezeichnete Zuspannvorrichtung angeordnet. Im Schiebesattel 20 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit Druckluft beaufschlagt wird, wird der Betätigungsarm 4a des Drehhebels 4 folglich von seiner Ruheposition in die in Fig.1 in gestrichelter Darstellung angedeutete Position bewegt. Die dem halbschalenförmigen Drehlager 30 abgewandte Seite des Drehhebels 4 ist unter Zwischenschaltung eines weiteren Lagers 31 über einen Exzenter 6 mit einer Traverse 7 gekoppelt, die innerhalb des Schiebesattels 2 verschiebbar gelagert ist und an ihrem der Bremsscheibe 1 zugewandten Ende eine Ausnehmung aufweist, die von einem Ansatz umgeben ist, welcher in einer entsprechenden Ausnehmung des Schiebesattels 20 so gelagert, daß die Traverse 7 eine geringfügige Schwenkbewegungen in der Zeichnungsebene ausführen kann. Innerhalb der genannten Ausnehmung ist eine Spiralfeder 78 angeordnet, die die Traverse 7 zum Drehhebel 4 hin vorspannt.

An dem der Bremsscheibe 1 zugewandten Ende der Traverse 7 ist mindestens ein sich kegelförmig verbreiterndes Druckstück 70 befestigt, das mit seinem flachen Enden an der Druckplatte bzw. Belagträgerplatte 12 eines Bremsbelags 11 anliegt, der bremsscheibenseitig eine aus einem geeigneten Material bestehende Bremsbacke 10 aufweist. Der Bremsbelag 11 ist insbesondere in Umfangsrichtung zur Bremsscheibe 1 an den seitlichen Führungsflächen eines (nicht gezeigten) Bremsbelagschachts quer zur Bremsscheibe 1 verschiebbar geführt. Auf der gegenüberliegenden Seite der Bremsscheibe 1 ist ein gleichartiger Bremsbelag 11 angeordnet, der ebenfalls in einem (nicht gezeigten) Bremsbelagschacht verschiebbar geführt ist. Auf seiner durch die Belagträgerplatte 12 gebildeten Rückseite wird dieser zweite Bremsbelag 11 von einer Belagdruckfläche 21 beaufschlagt, die an einem als H-Profil ausgebildeten Teil des Schiebesattels 20 sitzt.

Nachfolgend wird das Arbeitsprinzip der Scheibenbremse kurz erläutert. Bei Druckluftbeaufschlagung des Bremszylinders 40 wird der Betätigungsarm 4a gemäß Fig.1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Das an der Traverse 7 befestigte Druckstück 70 drückt folglich den rechten Bremsbelag 11 unter Überwindung des Lüftspiels gegen die Bremsscheibe 1. Wenn der Betätigungsarm 4a weiter nach links verschwenkt wird, bewegt sich der Schiebesattel aufgrund der auf die Bremsscheibe 1 ausgeübten Kraft in Fig.1 nach rechts, so daß schließlich auch der linke Bremsbelag 11 von der Belagdruckfläche 21 gegen die Bremsscheibe 1 gepreßt wird. Bei voller Bremsbetätigung werden beide Bremsbeläge 11 mit einem bestimmten Maximaldruck gegen die Bremsscheibe 1 gedrückt.

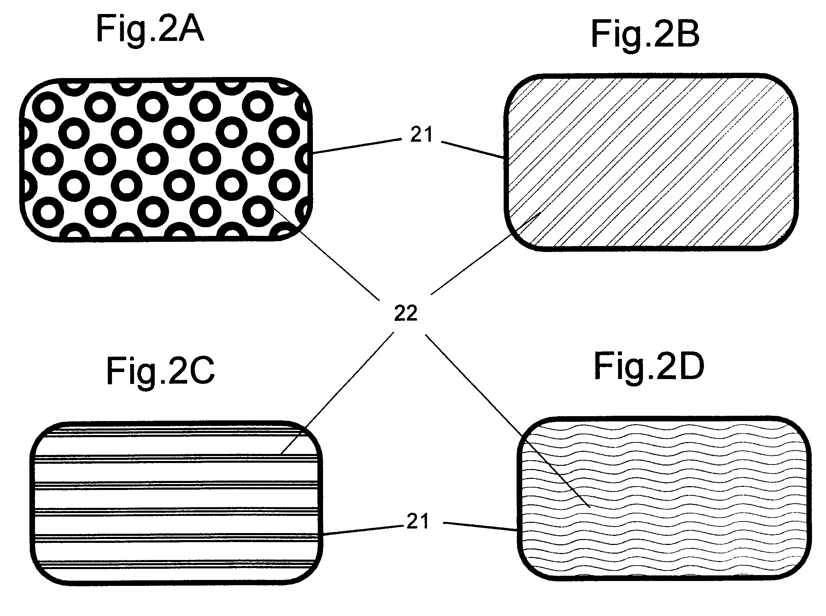

Erfindungsgemäß ist auf der Belagdruckfläche 21 ein Oberflächenprofil 22 ausgebildet, das in den Fig.2A bis 2D in mehreren Varianten gezeigt ist. Wie aus diesen Figuren hervorgeht, ist der genaue Verlauf bzw. die Kontur des Oberflächenprofils 22 im wesentlichen ohne Bedeutung, wobei lediglich darauf geachtet werden sollte, daß es sich einigermaßen gleichmäßig über die Oberfläche erstreckt. Somit kann im Prinzip jedes der in den Fig.2A bis 2D gezeigten Profile für die Zwecke der Erfindung verwendet werden. Erfindungsgemäß ist es demgegenüber von Bedeutung, daß die wirksame Anlagefläche an der rückseitigen Belagträgerplatte 12 des Bremsbelags 11 so bemessen wird, daß bei maximalem Bremsdruck eine Flächenpressung hervorgerufen wird, die zu einer im wesentlichen vollständigen Anlage der Belagdruckfläche an der Belagträgerplatte 12 des Bremsbelags 11 führt. Mittels dieser Dimensionierung des Profils wird erreicht, daß die unter Maximaldruck beim Bremsen auftretende Flächenpressung auf der Rückseite des Bremsbelags 11 bzw. der Belagträgerplatte 12 eine Verformung der Oberfläche herbeiführt; das Profil der Belagträgerplatte preßt sich somit nach Ablauf einer gewissen "Einbremszeit" bzw. nach mehreren Bremsvorgängen in das Material der Belagträgerplatte 12 ein, so daß beide Flächen schließlich formschlüssig aneinanderliegen.

In diesem Zusammenhang ist es vorteilhaft, wenn die Belagträgerplatte 12 aus einem Material besteht, das weicher ist als das Material der Belagdruckfläche 21 des Schiebesattels 20. Auf diese Weise wird sichergestellt, daß die Flächenpressung beim Bremsen ausschließlich dazu führt, daß sich das Profil der Belagdruckfläche 21 in die Rückseite der Belagträgerplatte 12 einprägt, d.h. daß nicht umgekehrt die Belagträgerplatte 12 eine Verformung des Profils herbeiführt (wobei eine nur geringfügige Verformung in der Praxis ohne Bedeutung ist); Das Profil 22 ist daher auch nach mehreren Belagwechseln noch ausreichend stark konturiert, um nach dem Einbremsvorgang formschlüssig am Bremsbelag 11 anzuliegen. Wenn ein Bremsbelag verwendet wird, der keine Belagträgerplatte aufweist, ist diese Bedingung ohnehin erfüllt; jedoch sind auch die gängigen Belagträgerplatten in der Regel weicher als das Material des Schiebesattels 20.

Erfindungsgemäß wird das in den Fig.2A bis 2D gezeigte Profil 22 der Belagdruckfläche 21 durch einen Prägevorgang mit bekannten Präge- oder Stempelwerkzeugen ausgebildet, was problemlos und jedenfalls wesentlich preisgünstiger durchgeführt werden kann, als die Herstellung der im Stand der Technik üblichen, plan zugefrästen Anlageplatte. Der beim Prägevorgang auf den Schiebesattel 20 ausgeübte Druck kann im übrigen so niedrig gehalten werden, daß ein unerwünschtes Verziehen dieses Bereichs des Schiebesattels 20 ausgeschlossen ist, wie Praxisversuche bestätigt haben.

Alternativ hierzu kann das erfindungsgemäße Profil 22 auch im Zuge des Gießens des Schiebesattels 20 ausgebildet werden, wenn die betreffende Gußform an der Belagdruckfläche 21 beispielsweise so gestaltet wird, daß an dieser Stelle ein geeignetes Profil 22 entsteht. Häufig ist die beim Gießen entstehende Oberflächenrauhigkeit jedoch so ausgeprägt, daß sie ein ausreichend starkes Profil ergibt, um beim Bremsen die gewünschte Flächenpressung hervorzurufen; in diesem Fall ist die Herstellung der Belagdruckfläche 22 praktisch mit keinen Zusatzkosten verbunden.

Die in den Fig.2A bis 2D gezeigten Profile können auch durch andere Profile ersetzt werden, sofern diese eine geeignete Dimensionierung für die gewünschte Flächenpressung aufweisen.

## Patentansprüche

1. Verfahren zum Herstellen derjenigen Belagdruckfläche (21) des Schiebesattels (20) einer Scheibenbremse, die der Zuspannvorrichtung (3) der Scheibenbremse bezüglich der Bremsscheibe (1) gegenüberliegt und beim Bremsen auf die Rückseite (12) des auf dieser Seite befindlichen Bremsbelags (11) derart einwirkt, daß dieser gegen die Bremsscheibe (1) gedrückt wird,
*dadurch gekennzeichnet, daß*
an der Belagdruckfläche (21) ein Oberflächenprofil (22) ausgebildet wird, dessen wirksame Anlagefläche an der Rückseite (12) des Bremsbelags (11) so bemessen wird, daß bei maximalem Bremsdruck eine Flächenpressung hervorgerufen wird, die zu einer im wesentlichen vollständigen Anlage der Belagdruckfläche (21) an der Rückseite (12) des Bremsbelags (11) führt.

2. Verfahren nach Anspruch 1, *dadurch gekennzeichnet, daß* das Qberflächenprofil (22) an der Belagdruckfläche (21) mittels eines Prägevorgangs ausgebildet wird.

3. Verfahren nach Anspruch 1, *dadurch gekennzeichnet, daß* das Oberflächenprofil (22) an der Belagdruckfläche (21) beim Gießen des Schiebesattels ausgebildet wird.

4. Schiebesattel (20) für eine Scheibenbremse, mit einer Belagdruckfläche (21), die der Zuspannvorrichtung (3) der Scheibenbremse bezüglich der Bremsscheibe (1) gegenüberliegt und beim Bremsen auf die Rückseite (12) des auf dieser Seite befindlichen Bremsbelags (11) derart einwirkt, daß dieser gegen die Bremsscheibe (1) gedrückt wird,
*dadurch gekennzeichnet, daß*
die Belagdruckfläche (21) ein Oberflächenprofil (22) aufweist, dessen wirksame Anlagefläche an der Rückseite (12) des Bremsbelags (11) so bemessen ist, daß bei maximalem Bremsdruck eine Flächenpressung auftritt, die zu einer im wesentlichen vollständigen Anlage der Belagdruckfläche (21) an der Rückseite (12) des Bremsbelags (11) führt.

5. Schiebesattel (20) nach Anspruch 4, *dadurch gekennzeichnet, daß* die Belagdruckfläche (21) einstückig mit dem Schiebesattel (20) ausgebildet ist.

6. Schiebesattel (20) nach Anspruch 4 oder 5, *dadurch gekennzeichnet, daß* die Belagdruckfläche (21) an einer metallischen Belagtragerplatte (12) des Bremsbelags (11) anliegt.
